# EUROPEAN PATENT APPLICATION

(11) **EP 2 330 715 A1**
(43) Date of publication of application: **08.06.2011**
(21) Application number: 09177245.9
(22) Date of filing: 26.11.2009
(51) Int. Cl.: H02J 7/00

(54) **Power conversion device**

(71) Applicant: Giga-Byte Technology Co., Ltd., Taipei 231 (TW)
(72) Inventor: Ma, Mon-Ming, Taipei 231 (TW); Liu, Yi-Yuan, Taipei 231 (TW); Kao, Chien-Chih, Taipei 231 (TW)
(74) Representative: Schwerbrock, Florian

(57) **Abstract**

A power conversion device for portable computer, which having a housing and a power converter circuit and a charging circuit contained therein is disclosed. The power converting circuit can convert the AC external power to DC power suitable for operating the portable computer, and transfer the DC power to the portable computer through the output power line. The charging circuit is connected to the power converter circuit which provides power to the backup battery cell. Moreover, the power conversion device includes replaceable charging plug positioned in the housing, so that the backup battery for various models computers requiring different supply voltage can be recharged via these replaceable jack.

## Description

### Field of the Invention

The present invention relates a power conversion device for portable computers, and more especially, to a device having replaceable charging jack which can simultaneously recharge the backup rechargeable battery cell and provide power to the power conversion device.

### Description of the Prior Art

In general, most notebook computers are equipped with dual batteries which may be located either internally or externally to the computer system, for example, main or backup battery, for the sake of necessity. Typically, to recharge the battery cell must depend on operating the computer via the mainboard. As a result, you should have to remove the main battery from the notebook computer and insert the backup battery therein before recharging the backup battery. Such frequent replacements of battery produce too much inconvenience.

Taiwan Patent No. 210158 discloses a conventional power supply re-charger for notebook computer using either for a household or a vehicle. The re-charger includes input port which is configured for coupling to AC or DC power source, and further two output ports which are configured for powering the notebook computer and recharging the battery cell at the same time, so as to make less use of the backup battery. The purpose of the patent is to recharge the main battery contained in the notebook computer while operating the notebook computer, not to recharge the backup battery.

Taiwan Patent No.M297047 and 1302776 disclose a portable charger for mobile phone, which is not only used as transforming and rectifying charger, but as a charger for a rechargeable battery cell with battery chamber designed therein. Furthermore, the portable charger is equipped with a charge port and a seat for the backup battery, such as Lithium-ion (Lilon) cells, to provide power to the backup battery. The portable charger can simultaneously charge the mobile phone, and the rechargeable battery cell positioned in the battery chamber, and another backup battery outside of the mobile phone.

Similarly, Taiwan Patent No.M244840 discloses a conventional multi-function charger, which can provide power to various types electronic apparatus requiring different voltage source by means of a charge-discharge circuit associated with different power adapter lines. The charger can convert AC external power to DC power associated with a transformer power line, so as to charge a rechargeable battery positioned in the battery chamber mounted in the charger, or to supply power to electronic apparatus indirectly. When there is no external power source, the power source stored in the rechargeable battery can be utilized to provide power to the electronic apparatus. However, the charger described above is not equipped with power converter device ,so its implementation should be associated with a transformer power line thus to convert external power supply to charge the rechargeable battery or the electronic apparatus.

Taiwan Patent No.M2315446 discloses a charger device having a housing, where a unit for storing electric charge, a first jack and a second jack are designed therein. Selectively, the first or second jack can be connected to a receiving port for battery or a receiving port for power source supply of a portable electronic apparatus, thus to provide power to the portable electronic apparatus via the charger device. Basically, the charger device is connected to AC power supply via a charging port, and is able to convert AC power into proper DC power to charge the unit for storing electric charge via a transformer circuit, and then provide power to the portable electronic apparatus. The charger device provides power to the portable electronic apparatus Indirectly by means of the unit for storing electric charge, which leads to the lower efficiency of power conversion.

### BRIEF SUMMARY OF THE INVENTION

A primary object of the present invention is to provide a power conversion device for portable computer, such as notebook computer. The power conversion device includes a housing, a power converter circuit and a charging circuit contained in the housing, an external power line, an output power line, and a charging Jack. The external power line extended from one end of the housing, and an external power plug formed at one distal end of the power line for electrically coupled to external power source supply. The output power line extended from an opposite end of the housing, and a power output plug formed at one distal end of the output power line for electrically coupled to the power receiving port of the notebook computer. Additionally, said external power line coupled to one end of the power converter circuit, said output power line coupled to the other end of the power converter circuit. The external AC power acquired through the external power line can be converted to DC power suitable for notebook computer, then supplied to the notebook computer through the output power line. The charging circuit is electrically coupled between the power converter circuit and the charging jack, so as to charge the backup battery cell of a notebook computer.

As described above, the power conversion device according to the present Invention Is capable of converting the alternate voltage into direct voltage and then providing power to the notebook computer. On the other hand, the power conversion device allows simultaneous charging the backup battery cell while providing power to the notebook computer. It is convenient for use to charge the rechargeable battery cell by connecting the battery to the power jack of the power conversion device directly, thus it is no longer to make use of the notebook computer while charging the battery.

Further, the charging jack according to the present invention is designed replaceable. Accordingly, the charging jack can be easily removed from the housing of the power conversion device, and be replaced with another similar charging jack suitable for various models notebook computers. This facilitates manufacturing various power conversion device coupled with corresponding charging jack to be adaptive for various models notebook computers. In other words, this provides economy and efficiency that various models notebook computer is able to utilize the same power conversion device by means of the replaceable charging jack.

### BRIEF DESCRIPTION OF THE DRAWINGS

FIG.1 is a perspective view of the power conversion device applying to a notebook computer according to the present invention;

FIG.2 is a block diagram of the power conversion device according to the present invention;

FIG.3 shows the power conversion device having replaceable charging jack according to the present invention;

FIG,4 shows an alternate form of the power conversion device having replaceable charging jack and a cover which protects the jack from damage;

FiG.5 illustrates the charging jack is covered by the cover shown in FIG.4;

FIG.6 shows another alternate form of the power conversion device having replaceable charging jack which can be pivoted outwards or Inwards;

FIG.7 illustrates the charging jack of FiG.6 which is pivoted inwards.

### DETAILED DESCRIPTION OF THE INVENTION

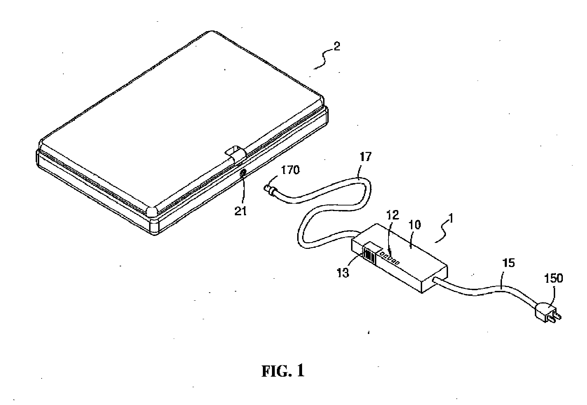

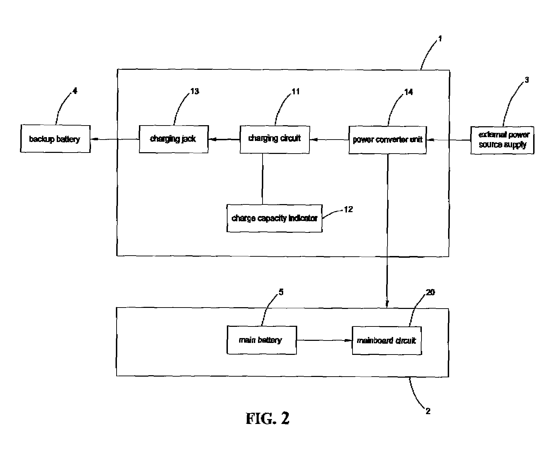

In the preferred embodiment of the present invention, as shown in FIG. 1, the power conversion device 1 is figured to supply power to a notebook computer. The power conversion device1 comprises a housing 10, an external power line 15 and an output power line 17 extended from either end of the housing 10 symmetrically, and a charging jack 13 and a charge capacity indicator 12 exposed to the outside of the housing 10. Referring to FIG.2, the power conversion device 1 also comprises a power converter circuit 14 and a charging circuit 11 contained In the housing 10.

Now referring to FIG.1 and FIG.2, an external power plug 150 is formed at one distal end of the external power line 15 for electrically coupled to external power source supply 3. A power output plug 170 formed at one distal end of the output power line 17 for electrically coupled to the power receiving port 21 of the notebook computer 2. The external power line 15 is connected to one end of the power converter circuit 14, the output power line 17 is connected to the other end of the power converter circuit 14. Thus, the power converter circuit 14 is able to convert the alternate voltage (AC) acquired through the external power line 15 into direct voltage (DC) required by the notebook computer 2, and then supply DC power to motherboard circuit 20 contained in the notebook computer 2 via the output power line 17. Alternatively, the external power line 15 and the output power line 17 can be connected to the housing 10 in a fixed or removable form, which facilitates carrying or packing by users.

As shown in FiG.2, the power converter circuit 14 is coupled to one end of the charging circuit 11, and the charging jack 13 formed at the other end thereof, in which case to provide power supply to the backup battery 4. While the backup battery 4 is connected to the charging jack 13, the power converter circuit 14 Is able to provide converted power supply to the motherboard circuit 20 of the notebook computer 2, as well as to charge the backup battery 4 by means of the charging circuit 11 through the charging jack 13. Said backup battery has no longer to be charged by operation the notebook computer. In other words, the backup battery 4 can be charged while the notebook computer 2 is in operation without removing the main battery 5 out of the notebook computer 2. Additionally, the charging circuit 11 is electrically connected to the charge capacity indicator 12 that indicates the state of the battery's electrical charge.

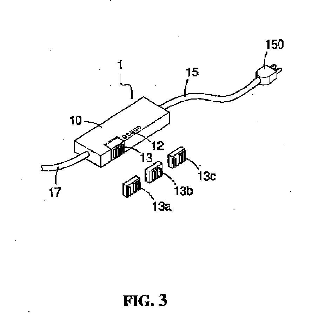

As shown in FIG.3, the charging jack 13 is mounted on the housing 10 of the power conversion device 1 in a detachable form. Accordingly, the charging jack 13 can be removed from the housing and replaced by other types charging jack noted 13a, 13b, or 13c, to be adaptive for various models notebook computer requiring different power supply.

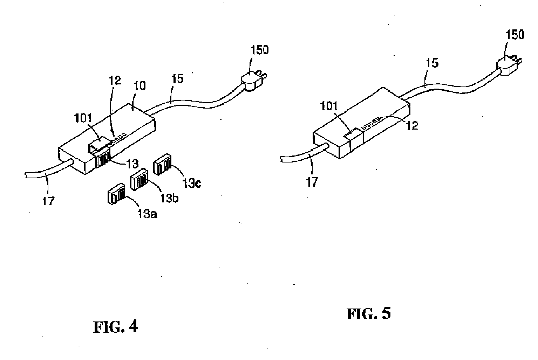

FIG. 4 illustrates another preferred embodiment of the present invention. A cover 101 is disposed on the housing which can be opened and closed to enclose the charging jack 13, so as to protect the pin connectors of the charging jack 13 from damage, as shown in FIG.5. As mentioned above, the charging jack 13 can be removed aparting from the housing and replaced by other types charging jack noted 13a, 13b, or 13c, to be adaptive for various models notebook computer requiring different power supply.

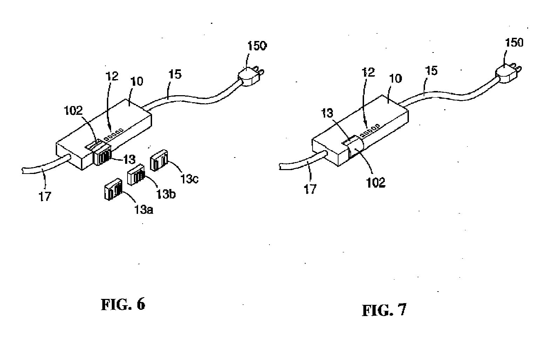

Turning now to Fig.6, FIG. 6 illustrates another preferred embodiment of the present invention. The replaceable charging jack 13 is pivoted engaged to the housing for enabling the charging jack 13 to be turned relative to the housing 10 outward or inward for pluging/unpluging into the rechargeable battery cells, as shown in FIG.6, FIG.7. As mentioned above, the charging jack 13 can be removed from the housing and replaced by other types charging jack noted 13a, 13b, or 13c, to be adaptive for various models notebook computer requiring different power supply.

It can be known from the preferred embodiments of the present invention that the present invention has the following advantages. It is convenient for use to simultaneously charge the backup rechargeable battery cell of the notebook computer and provide power to the notebook computer by means of the power conversion device according to the present invention. Moreover, the power conversion device is applicable for the demand of various models notebook computer requiring different voltage power by the utilization of the replaceable charging jack.

As is understood by a person skilled in the art, the foregoing preferred embodiments of the present invention are illustrated of the present invention rather than limiting of the present invention. It is intended to cover various modifications and similar arrangements included within the spirit and scope of the appended claims, the scope of which should be accorded the broadest interpretation so as to encompass all such modifications and similar structure.

## Claims

1. A power conversion device for a notebook computer comprising:
a housing;
an external power line connected to said housing, and an external power plug formed at one distal end of the external power line for electrically coupled to an external power source;
a output power line connected to said housing, and an power outlet plug formed at one distal end of the output power line for electrically coupled to a receiving port of said notebook computer;
a power converter circuit contained within the housing, said external power line connected to one end of the power converter circuit, said output power line connected to the other end of the power converter circuit, where external AC power acquired through the external power line can be converted to DC power required by the notebook computer, then supplied to the notebook computer through the output power line;
a charging circuit contained within the housing which is electrically coupled to the power converter circuit and configured for charging a backup battery of said notebook computer; and
a charging jack mounted on the housing which is electrically coupled to the charging circuit and configured for connecting to a backup battery.

2. The power conversion device according to claim 1, further including a charge capacity indicator mounted on the housing which is electrically coupled to the charging circuit and indicates the state of the battery's electrical charge.

3. The power conversion device according to claim 1 or 2, wherein said charging jack is assembled on the housing in a detachable form.

4. The power conversion device according to claim 1 or 2, wherein said charging jack is pivotally assembled on the housing.

5. The power conversion device according to claim 4, wherein said charging jack is assembled on the housing in a detachable form.

6. The power conversion device according to claim 1 or 2, further comprising: a cover disposed on the housing which can be opened and closed to enclose the charging jack.

7. The power conversion device according to claim 6, wherein said charging jack is assembled on the housing in a detachable form.
